# EUROPÄISCHE PATENTANMELDUNG

(11) **EP 0 731 343 A2**
(43) Veröffentlichungstag der Anmeldung: **11.09.1996**
(21) Anmeldenummer: 96102557.4
(22) Anmeldetag: 21.02.1996
(51) Int. Cl.: G01F 23/26

(54) **Sonde zur Überwachung von Flüssigkeit mit Leckageschutz**

(30) Priorität: 04.03.1995 DE 19507616
(71) Anmelder: GESTRA AG, D-28215 Bremen (DE)
(72) Erfinder: Borchers, Kerstin, 28307 Bremen (DE); Politt, Joachim-Christian, Dr., 28215 Bremen (DE); Schröter, Holger, 28832 Achim (DE)
(74) Vertreter: Eisenführ, Speiser & Partner

(57) **Zusammenfassung**

Bei einem Defekt der Isolationshülle (6) kann bei bekannten Sonden Medium aus dem Behälter (2) in den Innenraum des Sondengehäuses (1) und von dort in die Umgebung gelangen und dort befindliche Personen gefährden oder gar verletzen. Das Sondengehäuse (1) der neuen Sonde weist einen Innenraum mit zwei Kammern (13, 14) auf. Die erste, behälternahe Kammer (13) hält dem im Behälter (2) herrschenden Druck stand. Die zwischen der ersten (13) und der zweiten Kammer (14) vorhandene Durchtrittsöffnung (12) für die Sensorelektrode (5) oder für deren elektrischen Leiter wird durch ein bewegliches Verschlußteil (19) oder ein stationäres Verschlußorgan verschlossen. Im Falle einer Leckage an der Isolationshülle (6) würde der Druck aus dem Behälter (2) zwar in die erste Kammmer (13) gelangen, von dort könnte es sich aber nicht in die zweite Kammer (14) und weiter fortpflanzen. So ist unterbunden, daß bei einem Defekt Medium unter dem im Behälter (2) herrschenden Betriebsdruck durch das Sondengehäuse (1) in die Umgebung gelangt und zur Gefahr für dort befindliche Personen wird.

## Beschreibung

Die Erfindung betrifft eine Sonde der im Oberbegriff des Hauptanspruches spezifizierten Art.

Bei einem Defekt der Isolationshülle - z. B. Bruch einer keramischen Isolationshülle - kann bei derartigen Sonden Medium aus dem Behälter in den Innenraum des Sondengehäuses und von dort ggf. in die Umgebung gelangen. Insbesondere bei Einsatz unter hohen Temperaturen und Drücken, wie sie beispielsweise bei Hochdruckdampf herrschen, resultiert daraus eine große Gefahr für in der Nähe der Sonde befindliche Personen.

Der Erfindung liegt die Aufgabe zugrunde, eine Sonde der eingangs genannten Art zu schaffen, die ohne Gefahr in einem großen Temperatur- und Druckbereich einsetzbar ist.

Diese Aufgabe wird durch die im Anspruch 1 angegebenen Merkmale gelöst.

Der Innenraum des Sondengehäuses weist zwei Kammern auf, von denen die behälternahe so ausgebildet ist, daß sie dem im Behälter herrschenden Druck standzuhalten vermag. Im Falle einer Beschädigung der Isolationshülle würde der Druck aus dem Behälter in die erste Kammer gelangen, ohne sich allerdings von dort in die zweite Kammer fortpflanzen zu können. Dadurch ist unterbunden, daß bei einem Defekt Medium unter dem im Behälter herrschenden Betriebsdruck durch das Sondengehäuse in die Umgebung gelangt und dort befindliche Personen gefährdet oder verletzt. Während die erste Kammer druckfest zu gestalten ist, braucht die zweite Kammer hingegen keine Anforderungen an Druckbeständigkeit zu erfüllen. Bei hohen Betriebstemperaturen ist häufig ein besonders langes, als Kühlstrecke fungierendes Sondengehäuse erforderlich, damit am Anschluß der elektrischen Zuleitungen oder für die Anordnung elektrischer Schaltungen die notwendige niedrige Temperatur herrscht. Die erste Kammer kann dabei sehr kurz gehalten werden, während die benötigte Gehäusebaulänge unter Bildung einer entsprechend lang dimensionierten zweiten Kammer realisiert wird. Der Materialaufwand für das Sondengehäuse läßt sich so besonders niedrig halten.

Die Unteransprüche haben vorteilhafte Weiterbildungen der Erfindung zum Gegenstand.

Nach Anspruch 2 ist in der ersten Kammer ein Verschlußteil vorgesehen, das gemäß Anspruch 3 vorzugsweise an der Sensorelektrode oder deren elektrischen Leiter angeordnet ist. Im Normalfall läßt das Verschlußteil die Durchtrittsöffnung offen. Geringe, z. B. durch Diffusion oder eine unbedeutende Leckage in die Isolationshülle gelangende Mediummengen können dann problemlos von der ersten in die zweite Kammer entweichen. Bei einem merklichen Zustrom von Medium in die erste Kammer würde das Verschlußteil sich infolge der einwirkenden Strömungskräfte bzw. des Druckanstieges in der ersten Kammer in axialer Richtung zur Trennwand hin bewegen, bis es darauf zur Anlage kommt und die Durchtrittsöffnung verschließt.

Die Merkmale des Anspruches 4 lassen die Trennwand und das Verschlußteil als Schalter wirken. Im Normalfall, wenn Trennwand und Verschlußteil außer Kontakt sind, ist der von ihnen gebildete Schalter geöffnet. Bei einer Undichtigkeit schließt der Schalter jedoch. Er kann so zur Auslösung eines entsprechenden elektrischen Alarmsignals genutzt werden.

Eine zuverlässige Isolierung der Sensorelektrode bzw. ihres Leiters gegen die Trennwand wird durch Anspruch 5 erreicht. Zugleich wird in der Durchtrittsöffnung der freie Querschnitt reduziert und dadurch unterbunden, daß bei einem merklichen Zustrom von Medium in die erste Kammer bis zum Schließen des Verschlußteiles eine nennenswerte Menge in die zweite Kammer gelangen kann.

Durch die gemäß Anspruch 6 vorgesehenen Federmittel befindet sich das Verschlußteil bei intakter Sonde stets, also z. B. auch bei waagerecht angeordneter Sensorelektrode, in Offenstellung. Dies ist insbesondere auch dann von großem Vorteil, wenn Verschlußteil und Trennwand einen Schalter bilden. Die Federmittel werden so ausgeführt, daß das Verschlußteil bei merklichem Eindringen vom Medium aus dem Behälter schließt.

Durch die Merkmale des Anspruches 7 ist die erste Kammer ständig verschlossen. Beweglich angeordnete Bauteile sind dafür nicht erforderlich. Eine besonders vorteilhafte Ausführung des ständigen Verschlusses gibt der Anspruch 8 an.

Der Anspruch 9 ergibt eine elektrische Isolierung zwischen der Sensorelektrode und dem Sondengehäuse in dem behälterseitigen Endbereich der ersten Kammer. Dadurch wird bei nur geringer Mediummenge ein Fehlersignal der Sonde unterbunden. Das Medium kann ggf. aus dem Behälter eindringen oder sich evtl. infolge Temperaturwechsel durch Kondensation bilden.

Die Weiterbildung nach Anspruch 10 ermöglicht es kleinen Mediummengen, die in die zweite Kammer gelangt sind, nach außen zu entweichen. Für die Funktionssicherheit ist dies von Vorteil. Zudem führt eine geringe Mediummenge in der zweiten Kammer zu keinem Druckanstieg. Dies stellt einen wesentlichen Vorteil für eine nicht druckfest gestaltete zweite Kammer dar. Ein Durchgriff von außen in die zweite Kammer, der z. B. Funktionsstörungen verursachen könnte, sowie das Eindringen von Spritzwasser ist unterbunden.

In der Zeichnung sind Ausführungsbeispiele der erfindungsgemäßen Sonde dargestellt. Es zeigt
- Fig. 1: eine kapazitive Sonde mit einer nur bei Leckage verschlossenen Kammer,
- Fig. 2: eine konduktive Sonde mit einer nur bei Leckage verschlossenen Kammer,
- Fig. 3: eine kapazitive Sonde mit ständig verschlossener Kammer, und
- Fig. 4: das Verschlußorgan der Sonde nach Fig. 3 in anderem Maßstab.

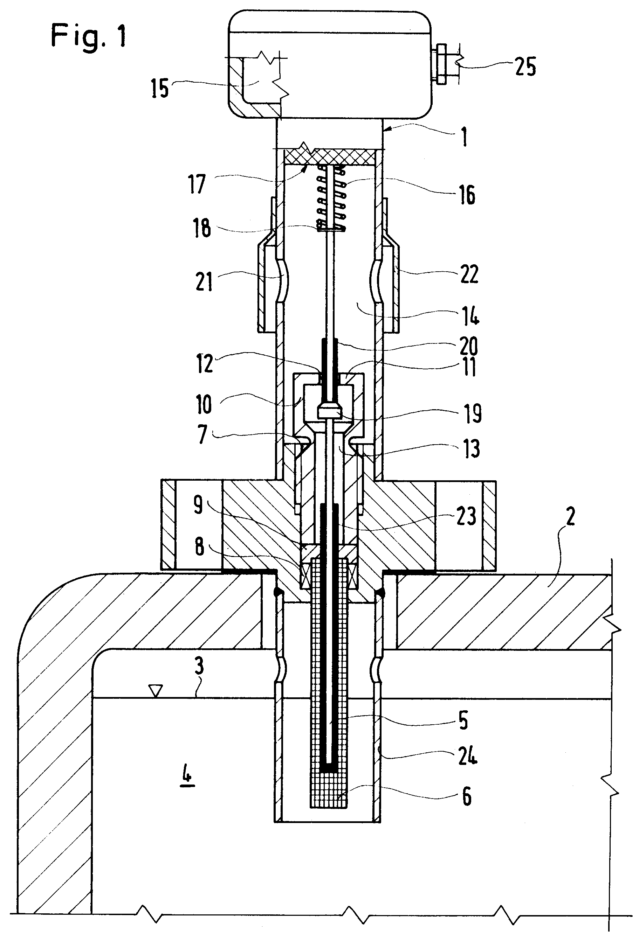

In Fig. 1 weist die kapazitive Sonde ein Sondengehäuse 1 auf, das an einem Behälter 2, z. B. einem Hochdruck-Dampfkessel, angebracht ist (Befestigungsmittel nicht dargestellt). In dem Behälter 2 soll das Niveau 3 einer Flüssigkeit 4, z. B. Wasser, mit einer aus dem Sondengehäuse 1 in den Behälter 2 hineinragenden Sensorelektrode 5 überwacht werden. Eine als an ihrem gehäusefernen Ende geschlossene Keramikhülse ausgebildete Isolationshülle 6 umgibt die Sensorelektrode 5 im Behälter 2 vollständig und mit Abstand. Das andere, offene Ende der Isolationshülle 6 ragt in eine Durchführungsbohrung 7 des Sondengehäuses 1 hinein und ist dort durch eine Dichtungspackung 8, eine Stützscheibe 9 und eine axial verstellbar in der Durchführungsbohrung 7 angeordnete Druckbuchse 10 fest und abgedichtet gehalten.

Die Druckbuchse 10 weist an ihrem behälterfernen Ende stirnseitig eine Trennwand 11 mit einer Durchtrittsöffnung 12 auf, wobei der Innenraum der Druckbuchse 10 eine erste Kammer 13 des Sondengehäuses 1 bildet. Die Druckbuchse 10 ist einschließlich der Trennwand 11 druckfest ausgebildet, für eine Belastung der Kammer 13 durch den im Behälter 2 herrschenden Druck. Die Sensorelektrode 5 wird von einem Metallstab gebildet, der sich aus der Isolationshülle 6, als elektrischer Leiter fungierend, durch die erste, behälternahe Kammer 13 und die Durchtrittsöffnung 12 in eine zweite, behälterferne Kammer 14 des Sondengehäuses 1 erstreckt und von dort in eine Anschlußkammer 15. In der zweiten Kammer 14 befindet sich eine Druckfeder 16, deren behälterabgewandtes Ende sich an einem elektrisch isolierten Widerlager 17 des Sondengehäuses 1 abstützt, während das andere, behälterzugewandte Federende in Elektrodenlängsrichtung auf einen Mitnehmer 18 der Sensorelektrode 5 einwirkt. In der ersten Kammer 13 ist an der Sensorelektrode 5 ein Verschlußteil 19 angeordnet. Während im Bereich der Durchtrittsöffnung 12 ein keramisches Isolationsrohr 20 die Sensorelektrode 5 umgibt. Es ist auf der Sensorelektrode 5 axial fixiert und isoliert sie gegen die Trennwand 11 elektrisch. Zugleich engt es den freien Querschnitt der Durchtrittsöffnung 12 stark ein.

Im Gegensatz zu dem mit dem Behälter 2 verbundenen, die Druckbuchse 10 haltenden Teil des Sondengehäuses 1 ist der die zweite Kammer 14 umschließende Teil des Sondengehäuses 1 nicht druckfest ausgebildet. Er weist Druckausgleichsöffnungen 21 auf, die die zweite Kammer 14 mit der Gehäuseumgebung verbinden. Dabei ist außen am Sondengehäuse 1 vor den Druckausgleichsöffnungen 21 eine Schirmwand 22 so angeordnet, daß zwar ein Druckausgleich zwischen der zweiten Kammer 14 und der Gehäuseumgebung möglich ist, zugleich aber ein Durchgreifen durch die Druckausgleichsöffnungen 21 sowie ein Eindringen von Spritzwasser in die zweite Kammer 14 verhindert wird.

In dem Freiraum zwischen der Sensorelektrode 5 und der Isolationshülle 6 umgibt ein gleichfalls als Keramikhülse ausgebildeter Isolator 23 die Sensorelektrode 5. Er ragt durch die Stützscheibe 9 hindurch in die erste Kammer 13 hinein und isoliert dadurch dort die von ihm umgebene Sensorelektrode 5 gegen die Stützscheibe 9 sowie gegen die Druckbuchse 10 und damit gegen das die elektrische Masse bildende Sondengehäuse 1.

Die Flüssigkeit 4, z. B. Wasser, und das im Behälter 2 darüber befindliche gasförmige Medium, z. B. Wasserdampf, weisen unterschiedliche Dielektrizitätskonstanten auf. Zwischen der Sensorelektrode 5 und einer elektrisch auf Masse liegenden Gegenelektrode 24 bildet sich demzufolge je nach vorhandenem Medium eine andere elektrische Kapazität aus. Die Kapazitätsänderungen führen zu einer Änderung des Niveausignals der Sonde, das zur Überwachung des Niveaus 3 der Flüssigkeit 4 über eine Signalleitung 25 an eine geeignete Überwachungs-, Steuerungs- oder Auswerteeinheit (nicht dargestellt) gegeben wird.

Tritt eine Undichtigkeit der äußeren Isolationshülle 6 ein, dann gelangt Medium aus dem Behälter 2 in die erste Kammer 13. Wenn es sich nur um eine geringfügige Leckage handelt, verbleibt das Verschlußteil 19 in der Offenstellung, seiner Normalstellung. Dadurch entweicht das eingedrungene Medium durch den freien Querschnitt der Durchtrittsöffnung 12 in die zweite Kammer 14 und von dort durch die Druckausgleichsöffnungen 21 nach außen. Durch den Isolator 23 und das Isolationsrohr 20 wird dabei die Ausbildung einer funktionsstörenden, elektrisch leitenden Verbindung zwischen der Sensorelektrode 5 und der elektrisch auf Masse liegenden Druckbuchse 10 verhindert. Die Druckfeder 16 gewährleistet die Offenstellung des Verschlußteiles 19 in jeder Einbaulage der Sonde, z. B. auch bei waagerecht angeordneter Sensorelektrode 5.

Eine große Leckage, z. B. ein Bruch der Isolationshülle 6, hätte einen deutlichen Druckanstieg in der Kammer 13 zur Folge. Dieser und die dabei in der Kammer 13 auftretende Strömung würde die Öffnungskraft der Druckfeder 16 überwinden und die im Sondengehäuse 1 axial beweglich angeordnete Sensorelektrode 5 mitsamt dem Verschlußteil 19 in Richtung zur zweiten Kammer 14 hin bewegen, bis das Verschlußteil 19 dichtend an der Trennwand 11 zur Anlage kommt und die erste Kammer 13 zur zweiten 14 verschließt. Da Verschlußteil 19 und Trennwand 11 beide elektrisch leitend ausgebildet sind, wirken sie wie ein Schalter, der geschlossen wird, während er im Normalfall offen ist. Durch diese Schalterfunktion kann bei eingetretener Undichtigkeit ein entsprechendes Alarmsignal ausgelöst werden. Da der freie Querschnitt der Durchtrittsöffnung 12 bei geöffnetem Verschlußteil 19 durch die Sensorelektrode 5 und das Isolationsrohr 20 stark eingeengt ist, kann bis zum Schließen des Verschlußteiles 19 keine nennenswerte Mediummenge aus der ersten Kammer 13 in die zweite 14 gelangen. Überdies entweicht dort eingedrungenes Medium durch die Druckausgleichsöffnungen 21 nach außen, so daß in der zweiten Kammer 14 kein spürbarer Druckanstieg erfolgt. Unter Druck stehendes Medium kann also aus dem Behälter 2 weder in die zweite Kammer 14 noch nach außen gelangen. Dies ist insbesondere bei einem Einsatz der Sonde unter sehr hohen Drücken und Temperaturen sicherheitstechnisch besonders bedeutsam. Außerdem kann die Wand des Sondengehäuses 1 im Bereich der zweiten Kammer 14 relativ dünn ausgeführt werden. Dies bietet nicht nur Kostenvorteile, sondern führt auch zu einer guten Abkühlung des Sondengehäuses 1, so daß in der Anschlußkammer 15 eine niedrige Temperatur gewährleistet ist.

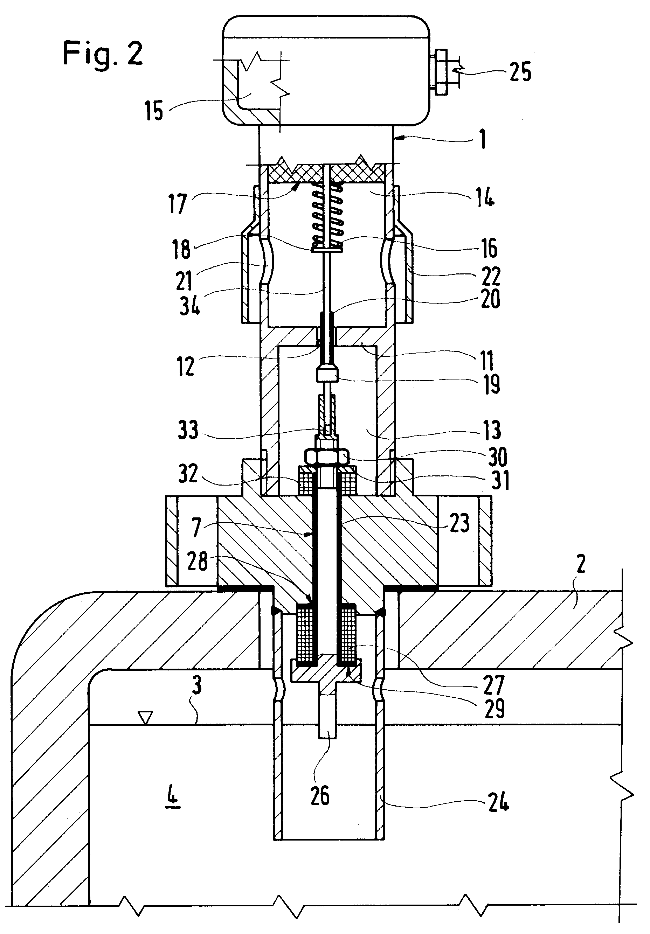

Anders als an der kapazitiven Sonde nach Fig. 1 ist an der konduktiven Sonde nach Fig. 2 die Sensorelektrode 26 in dem Behälter 2 nicht auf ganzer Länge, sondern nur auf einem an das Sondengehäuse 1 angrenzenden Längenabschnitt von einer Isolationshülle 27 umgeben. Diese ist als Keramikhülse ausgebildet und zwischen einer Auflagefläche 28 am Sondengehäuse 1 sowie einer Auflageschulter 29 an der Sensorelektrode 26 dichtend axial eingespannt. Die erforderliche Dichtkraft wird durch eine in der Kammer 13 auf die Sensorelektrode 26 aufgeschraubte Mutter 30 aufgebracht. Diese stützt sich hierzu über eine Stützscheibe 31 und eine keramische Isolationshülse 32 an dem Sondengehäuse 1 ab. Der die Sensorelektrode 26 umgebende rohrförmige Isolator 23 bewirkt in der Durchführungsbohrung 7 und in dem angrenzenden Teil der Kammer 13 eine Isolierung der Sensorelektrode 26 gegen das Sondengehäuse 1. Die Sensorelektrode 26 weist an ihrem in der Kammer 13 befindlichen Ende in Längsrichtung eine Kontaktbohrung 33 auf. Darin greift das Ende eines stabförmigen elektrischen Leiters 34 ein. Zwischen ihm und der Sensorelektrode 26 besteht eine elektrisch leitende, jedoch axial bewegliche Verbindung. Der Leiter 34 erstreckt sich durch die Durchtrittsöffnung 12 und die Kammer 14 bis in die Anschlußkammer 15. In der Kammer 13 trägt er das Verschlußteil 19, während er im Bereich der Durchtrittsöffnung 12 von dem Isolationsrohr 20 umgeben ist und in der Kammer 14 den Mitnehmer 18 für das Einwirken der Druckfeder 16 aufweist.

Der mit dem Behälter 2 verbundene und die erste Kammer 13 umschließende Teil des Sondengehäuses 1 einschließlich der Trennwand 11 ist entsprechend dem Druck im Behälter 2 druckfest ausgebildet. Der die zweite Kammer 14 aufnehmende Teil des Sensorgehäuses 1 ist nicht druckfest gestaltet. Er weist die Druckausgleichsöffnungen 21 und die Schirmwand 22 auf.

In dem mit der konduktiven Sonde ausgerüsteten Behälter 2 weisen die Flüssigkeit 4, z. B. Wasser, und das darüber befindliche gasförmige Medium, z. B. Wasserdampf, unterschiedliche elektrische Leitfähigkeiten auf. Zwischen der Sensorelektrode 5 und der elektrisch auf Masse liegenden Gegenelektrode 24 bildet sich demzufolge je nach vorhandenem Medium ein anderer elektrischer Widerstand aus. Die Widerstandänderungen führen zu einer Änderung des Niveausignals der Sonde.

Gelangt Medium aus dem Behälter 2 in die erste Kammer 13 der konduktiven Sonde nach Fig. 2 - eine Undichtigkeit an der Isolationshülle 27 -, dann gilt das hierzu für die kapazitive Sonde nach Fig. 1 Beschriebene in gleicher Weise.

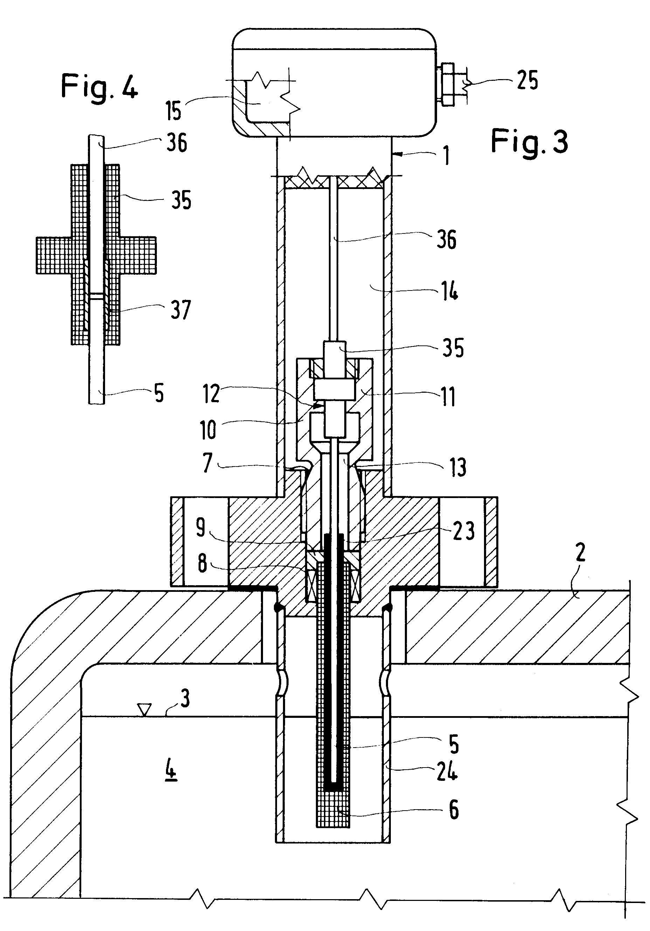

Die kapazitve Sonde nach Fig. 3 weist anstelle eines hubbeweglichen Verschlußteiles ein stationäres Verschlußorgan 35 auf, das die Durchtrittsöffnung 12 der Trennwand 11 ständig verschließt. Das Verschlußorgan 35 (s. Fig. 4) ist als Keramikhülse ausgebildet, durch die sich ein elektrischer Leiter 36 erstreckt, wobei Keramikhülse und Leiter 36 fest und dicht miteinander verlötet sind. Der Leiter 36 ist an seinem einen Ende über eine Kontaktbuchse 37 mit der Sensorelektrode 5 elektrisch leitend verbunden, während er sich mit seinem anderen Ende durch die zweite Kammer 14 bis in die Anschlußkammer 15 erstreckt. Alternativ möglich wäre auch, die Sensorelektrode 5 einstückig von der Isolationshülle 6 bis in die Anschlußkammer 15 zu führen und das Verschlußorgan 35 unmittelbar mit der Sensorelektrode 5 zu verlöten. Denkbar ist beispielsweise auch eine dreigeteilte Ausführung, in der ein kurzer Leiter auf das Verschlußorgan 35 beschränkt wird, und mit ihm zum einen die Sensorelektrode 5 und zum anderen ein sich in die Anschlußkammer 15 erstreckender Leiter elektrisch verbunden ist.

Dringt infolge einer Undichtigkeit der Isolationshülle 6 Medium aus dem Behälter 2 in die erste Kammer 13, dann verhindert das Verschlußorgan 35 ein Entweichen aus der druckfesten ersten Kammer 13 in die nicht druckfeste zweite 14. Sofern sich in der ersten Kammer 13 eine signifikante Menge Feuchtigkeit ansammelt, führt dies je nach deren elektrischen Eigenschaften entweder zu einer elektrisch leitenden Verbindung zwischen Sensorelektrode 5 und Druckbuchse 10 oder zu einer Änderung der elektrischen Kapazität zwischen beiden, wodurch ein Alarmsignal ausgelöst werden kann. Ein Defekt wird daher alsbald erkannt; dementsprechend ist eine frühzeitige Reparatur möglich, so daß ein Verschlußorgan 35 verwendbar ist, daß einer evtl. chemischen Aggressivität des Mediums aus dem Behälter 2 nicht dauerhaft standhält, sondern nur für einen begrenzten Zeitraum.

Wenngleich in der Zeichnung die Sonden jeweils einen sich durch die Kammern erstreckenden elektrischen Leiter aufweisen, ist die Erfindung dennoch auch für Sonden mit mehreren Leitern geeignet. Entweder können alle Leiter mit einem beweglichen Verschlußteil oder alle mit einem stationären Verschlußorgan versehen werden. Auch eine Kombination wäre denkbar, einer oder einige Leiter erhalten ein bewegliches Verschlußteil und der oder die anderen Leiter erhalten ein stationäres Verschlußorgan.

## Patentansprüche

1. Sonde zur Überwachung von Flüssigkeit in einem Behälter mit
- einem am Behälter zu befestigenden Sondengehäuse,
- einer in den Behälter hineinragenden Sensorelektrode und
- einer die Sensorelektrode im Behälter umgebenden, dichtend am Sondengehäuse gehaltenen Isolationshülle
dadurch gekennzeichnet, daß
- der Innenraum des Sondengehäuses (1) eine erste behälternahe und eine zweite behälterferne Kammer (13, 14) sowie eine dazwischen befindliche Trennwand (11) aufweist, die mit einer Durchtrittsöffnung (12) versehen ist,
- die Sensorelektrode (5) oder ein damit verbundener elektrischer Leiter (34, 36) sich von der ersten Kammer (13) durch die Durchtrittsöffnung (12) in die zweite Kammer (14) erstreckt,
- die Wände der behälternahen ersten Kammer (13) einschließlich der Trennwand (11) druckfest ausgebildet sind und
- Mittel (19, 35) vorgesehen sind, die die Durchtrittsöffung (15) druckfest verschließen.

2. Sonde nach Anspruch 1,
dadurch gekennzeichnet, daß in der ersten Kammer (13) ein gegenüber der Trennwand (11) axial bewegliches Verschlußteil (19) für die Durchtrittsöffnung (12) angeordnet ist, das bei intakter Sonde eine von der Durchtrittsöffnung (12) entferntgelegene Stellung innehat, während es unter dem Einfluß zuströmenden Mediums aus dem Behälter (2) die Durchtrittsöffnung (12) verschließt.

3. Sonde nach Anspruch 2,
dadurch gekennzeichnet, daß die Sensorelektrode (5) oder der Leiter (34) gegenüber der Trennwand (11) axial beweglich angeordnet ist und das Verschlußteil (19) trägt.

4. Sonde nach einem oder mehreren der Ansprüche 1 bis 3,
dadurch gekennzeichnet, daß das Verschlußteil (19) und der gegenüberliegende Teil der Trennwand (11) elektrisch leitend ausgebildet sind.

5. Sonde nach einem oder mehreren der vorhergehenden Ansprüche,
dadurch gekennzeichnet, daß die Sensorelektrode (5) oder der Leiter (34) in der Durchtrittsöffnung (12) von einer elektrischen Isolation (20) umgeben ist.

6. Sonde nach einem oder mehreren der Ansprüche 2 bis 5,
dadurch gekennzeichnet, daß Federmittel (16) vorgesehen sind, die eine auf das Verschlußteil (19) einwirkende Öffnungskraft erzeugen.

7. Sonde nach Anspruch 1,
dadurch gekennzeichnet, daß an der Trennwand (11) ein die Durchtrittsöffnung (12) verschließendes Verschlußorgan (35) aus Isolationswerkstoff angebracht ist, das von dem sich zwischen beiden Kammern (13, 14) erstreckenden elektrischen Leiter (36) durchsetzt ist.

8. Sonde nach Anspruch 7,
dadurch gekennzeichnet, daß das Verschlußorgan (35) als Keramikhülse ausgebildet und der Leiter (36) mit ihr verlötet ist.

9. Sonde nach einem oder mehreren der vorhergehenden Ansprüche,
dadurch gekennzeichnet, daß die Sensorelektrode (5,26) im behälterseitigen Endbereich der ersten Kammer (13) von einem elektrischen Isolator (23) umgeben ist.

10. Sonde nach einem oder mehreren der vorhergehenden Ansprüche,
dadurch gekennzeichnet, daß
- das Sondengehäuse (1) mindestens eine Druckausgleichsöffnung (21) aufweist, die die zweite Kammer (14) mit der Gehäuseumgebung verbindet, und
- am Sondengehäuse (1) Schutzmittel (22) vorgesehen sind, die einen Durchgriff durch die Druckausgleichsöffnung (21) verhindern.
